# EUROPEAN PATENT APPLICATION

(11) **EP 1 510 746 A1**
(43) Date of publication of application: **02.03.2005**
(21) Application number: 03255286.1
(22) Date of filing: 26.08.2003
(51) Int. Cl.: F16L 47/03, B29C 65/02

(54) **Method for joining multi-layered pipe**

(71) Applicant: Glynwed Pipe Systems Limited, Kent, TN 13 1SD (GB)
(72) Inventor: Lilley, Graham, deceased (GB)
(74) Representative: Townsend, Victoria Jayne

(57) **Abstract**

A method for joining a multi-layered pipe 37 to a coupling 35, the multi-layered pipe including at least one electrically conducting layer 3 and at least one thermoplastic layer 1, 2 and the coupling 35 comprising a thermoplastic material, the method comprising:
fitting an end of the multi-layered pipe into an end 36a of the coupling;
encircling the assembled pipe end and coupling with an electrically conductive coil 31; and
passing an alternating current through the electrically conductive coil 31 sufficient to cause mutual induction in the electrically conducting layer 32 of the multi-layer pipe 37.

## Description

This invention relates to the joining of multi-layered pipes, in particular to a method of joining multi-layer pipes which include at least one layer of metallic or other conductive material and at least one layer of non-conductive material.

The use of coaxial multi-layered pipes is well known. Such pipes are commonly used to simultaneously employ desirable properties of two or more materials in a given application. For example, in order to convey a corrosive chemical, a pipe construction material to be in contact with the chemical would need to be resistant to that chemical, however, the chemical-resistant material may not have sufficient mechanical strength to contain the fluid pressure needed to convey the chemical along the pipe. This problem is addressed by introducing a second layer of pipe construction material separated from the chemical by the first, chemical-resistant layer. The second layer need not be resistant to the chemical but is selected to have the mechanical properties needed to contain the chemical as it is conveyed through the pipe line. In the foregoing example, the first (or inner, chemical-resistant) layer may be a polymer and the second (or outer, mechanically reinforcing) layer, a metal.

Often, due to the very different chemical nature of adjacent layers in a multi-layer pipe, the layers of the pipe cannot be bonded together. In such a situation, a third or tie layer is introduced between the first and second layer, the tie layer having chemical properties which enable it to be bonded directly with each of the adjacent layers.

It will be understood that multiple additional layers optionally interspersed with additional tie layers may be included in a multi-layer pipe as previously described.

It will be appreciated that, particularly in hostile environments, there is a high potential for delamination of the multi-layered pipes.

Conventionally, multi-layer pipes of the type previously described are connected by means of mechanical fittings. These mechanical fittings are typically configured to retain the layers of the pipe in compression with each other and so prevent delamination of the pipe. Such fittings may comprise a "push-fit" annulus for receiving the pipe or a crimping mechanism for crimping the pipe ends.

It is known to connect single layer plastic pipes using electro-fusion couplings. The latter include a coiled length of metal which is bedded into the coupling during manufacture. The coupling is then fitted around a pipe and an electrical current is passed through the metal coil. The heat produced by the electrical current causes local melting and fusion of the coupling to the outer surface of the pipe.

The use of conventional multi-layer electro-fusion coupling techniques in multi-layer pipes has been considered but is disadvantageous as these techniques serve only to join couplings to the outer layer of the multi-layered pipes providing no means for preventing delamination of the pipes. Furthermore, these couplings require a relatively complex, multi-stage construction rendering them slow and expensive to manufacture.

The present invention aims to provide a more cost effective, alternative method for joining multi-layered pipes of the construction previously described.

In accordance with the present invention there is provided a method for joining a multi-layered pipe to a coupling, the multi-layered pipe including at least one electrically conducting layer and at least one thermoplastic layer and the coupling comprising a thermoplastic material, the method comprising;
fitting an end of the multi-layered pipe into an end of the coupling;
encircling the assembled pipe end and coupling with an electrically conductive coil; and
passing an alternating current through the electrically conductive coil sufficient to cause mutual induction in the electrically conducting layer of the multi-layer pipe.

The passage of an alternating current through the electrically conducting coil induces a current in the conducting layer of the pipe. This induced current causes local heating sufficient to melt the thermoplastic layer of the pipe and the thermoplastic of the coupling, thus the pipe and coupling become thermally bonded.

The method provides a homogenous weld about the pipe end which is less susceptive to thermal effects such as shrinkage or expansion often encountered in the use of mechanical fittings and which can ultimately result in leakage of materials carried in the pipe.

The method is particularly useful where both the outermost and innermost layers of the pipe comprise a thermoplastic.

Using known solid state induction techniques, the heating parameters for the method such as, cycle time, current frequency and power input can be accurately controlled allowing a high degree of repeatability contributing to consistency of joint integrity and a reduction in rejects.

Heat generation by mutual induction is time and energy efficient, thus joining costs and process times can be minimised. The process is a clean and non polluting producing no harmful emissions, noise or waste heat which may significantly affect the surrounding environment and as such is safe and not unpleasant for manufacturers to use.

A particular advantage of using the method where the multi-layer pipe has a thermoplastic innermost and outermost layer is that the bore of the pipe is included in the seal and the pipe end face isolated from internal fluid pressures of fluids conveyed through the pipe, the incidence of pipe end delamination is, consequently, eliminated.

The method has application in joining of pipes to couplings of all types including but not strictly limited to; T-junctions, elbows, 45° elbows, cross pieces and Y-pieces. The couplings are conveniently provided with cylindrical recesses in their open ends configured to receive the ends of pipes to be joined. This coupling configuration ensures that the bore of the pipe is always included in the seal and assists in the elimination of pipe end delamination. It is to be understood that the term coupling as stated herein is intended to include pipe end fittings for closing the ends of pipes as well as fittings for joining pipes together.

Couplings used in the method may be simple, low cost mouldings of thermoplastic material, simpler and cheaper to manufacture than mechanical fittings previously used in the described applications. Furthermore, the need to include any metal content as required in the aforementioned electro-fusion couplings of the prior art is removed rendering the couplings simpler and cheaper to manufacture than these prior art electro-fusion couplings.

The resulting joint is considerably more leak proof than joints provided by mechanical methods such as mechanical crimping.

To assist the reader in understanding the invention, there follows a description of some embodiments of pipes and couplings to which the invention may be applied and of apparatus which may be used to perform the invention.

The following Figures are referred to in the discussion which follows:
Figure 1 illustrates an axial cross section through a multi-layered pipe to which the present invention may usefully be applied;
Figure 2 illustrates the principle of mutual induction as it occurs in a metallic tube surrounded by an induction coil having a current passed through it.

Figure 3 illustrates a pipe and coupling being joined in accordance with the method of the invention.

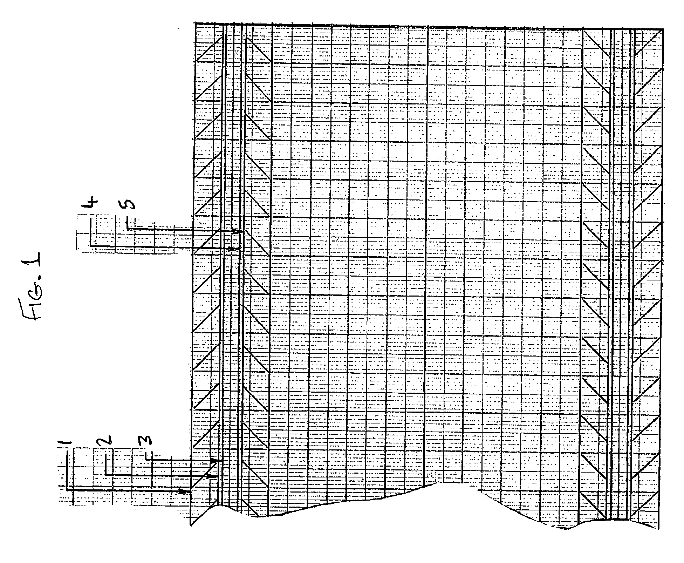

As can be seen from Figure 1, a multi-layered pipe to which the method of the invention may be applied comprises five coaxial layers; an outermost polymer layer 1, central metallic layer 3, and an innermost polymer layer 5; an outer tie layer 2 located between the outermost polymer layer 1 and the central metallic layer 3 and an inner tie layer 4 located between the central metallic layer 3 and the innermost polymer layer 5.

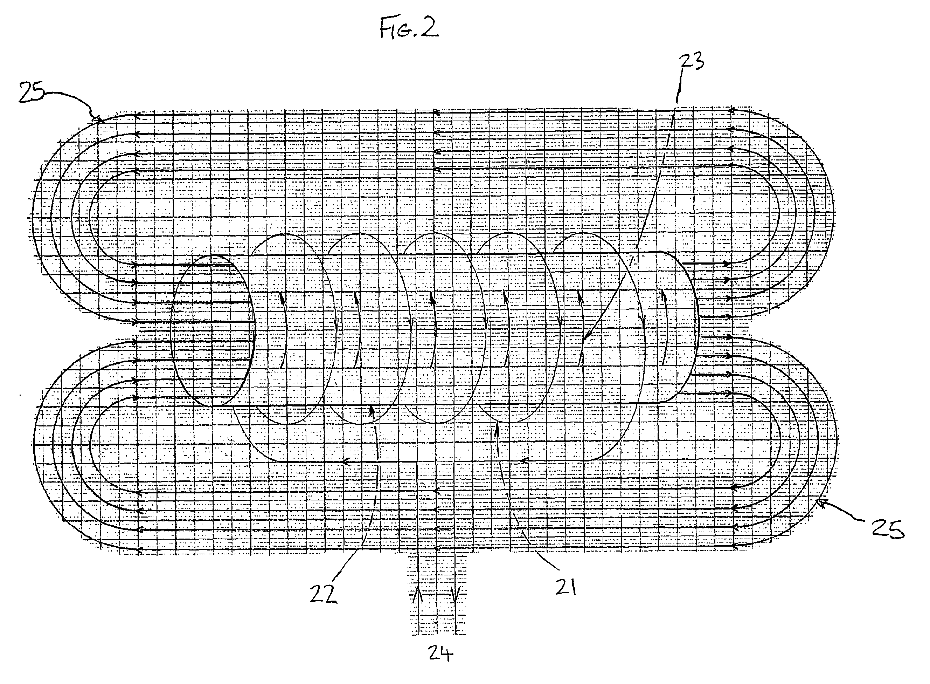

Figure 2 illustrates a primary induction coil 21 encircling a tubular metal core 22. A current is induced into the primary coil by a supply 24. A magnetic B-field 25 results from the current in the primary coil 21 which in turn induces in the tubular metal core a secondary current 23. It will be appreciated that due to resistance in the metal material of the tubular core 22, a heating effect will result from the secondary current 23.

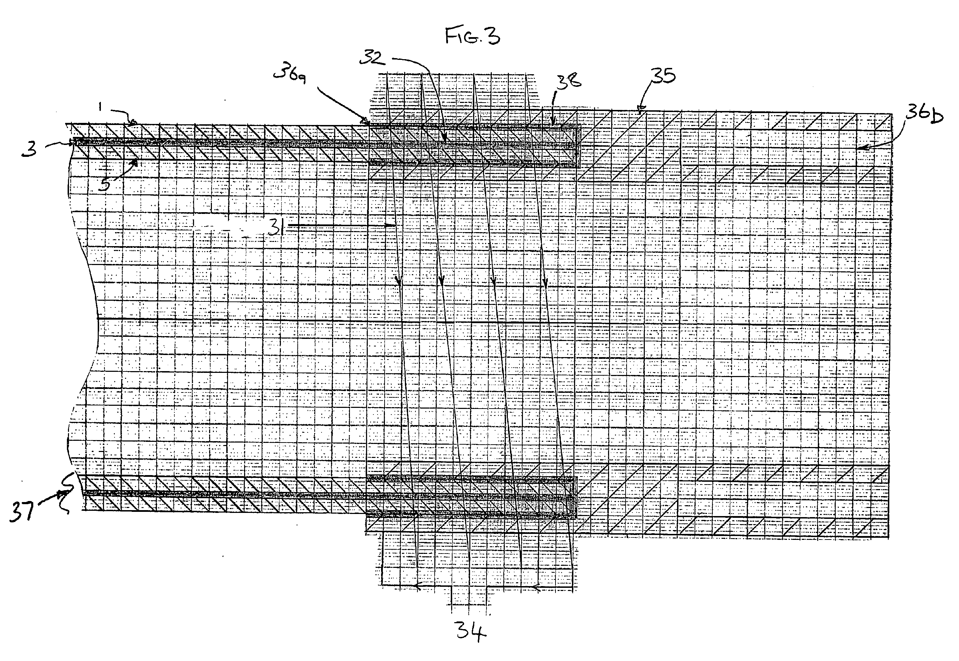

In the left hand side of Figure 3 there can be seen a multi-layered pipe of similar construction to that shown in Figure 1. To the centre and right of the Figure is shown a coupling 35 which essentially comprises a hollow tubular moulding of thermoplastic material having an annular slot 36a, 36b provided in each end. The multi-layered pipe 37 is slotted into the annular slot 36a. The assembled pipe and coupling are positioned inside a primary induction coil 31 provided with an alternating current by current supply 34. As a consequence of the current 34 in the primary coil 31, there is induced in a portion 32 of the central metallic layer 3 of the multi-layered pipe 37 a secondary current. The secondary current in turn produces local heating which leads to a region 38 of local melting of the coupling 35 and the innermost and outermost thermoplastic layers 1, 5 of the multi-layered pipe 37. The molten layers bond and on removal of the assembly from the primary coil, there is provided a fully bonded pipe-coupling join. The process can be repeated with a second pipe in the second annular slot 36b to provide a securely joined pipe.

## Claims

1. A method for joining a multi-layered pipe to a coupling, the multi-layered pipe including at least one electrically conducting layer (3) and at least one thermoplastic layer (1,5) and the coupling (35) comprising a thermoplastic material, the method comprising;
fitting an end of the multi-layered pipe (37) into an end of the coupling (35) ;
encircling the assembled pipe end and coupling with an electrically conductive coil (21); and
passing an alternating current through the electrically conductive coil (21) sufficient to cause mutual induction in the electrically conducting layer (3) of the multi-layer pipe.

2. A method as claimed in claim 1 **characterised in that** the outermost (1) and innermost (5) layers of the pipe comprise a thermoplastic.

3. A method as claimed in claim 1 or claim 2 **characterised in that** the electrically conducting layer (3) comprises a metal.

4. A method as claimed in claim 1 or claim 2 **characterised in that** the electrically conducting layer (3) comprises a conductive thermoplastic.

5. A method as claimed in any of claims 1 to 3 **characterised in that** the pipe comprises an innermost (1) and outermost (5) layer of polyethylene and a central layer (3) of aluminium.

6. A method as claimed in any preceding claim **characterised in that** the pipe includes one or more tie layers (2,4).

7. A method as claimed in any preceding claim **characterised in that** the coupling (35) comprises a moulded piece of thermoplastic material having at least one open end and an annular slot (36a, 36b) provided in the at least one open end, the slot being configured for receiving the multi-layered pipe (37).

8. A method as claimed in any preceding claim **characterised in that** the coupling (35) is selected from; a T-junction, an elbow joint, a 45° elbow joint, a cross piece, a Y-piece or an end piece.

9. A combination of one or more multi-layered pipes (37) and a coupling (35) joined according to the method of any preceding claim.

10. A pipe coupling (35) for joining or capping a multi-layered pipe (37), the coupling (35) **characterised by** having a plastic body of unitary configuration and including at least one annular recess (36a, 36b) configured for receiving a pipe end.

11. A pipe coupling as claimed in claim 10 **characterised in that** the fitting is a pipe coupling selected from; a T-junction, an elbow joint, a 45° elbow joint, a cross piece, a Y-piece or an end piece.
